# EUROPEAN PATENT SPECIFICATION

(11) **EP 1 444 110 B1**
(45) Date of publication and mention of the grant of the patent: **08.02.2006**
(21) Application number: 02777501.4
(22) Date of filing: 11.11.2002
(51) Int. Cl.: B60M 1/24, H01R 4/40

(54) **CONNECTOR FOR CATENARY WIRES**
VERBINDUNG FÜR FAHRDRÄHTE
CONNECTEUR POUR FILS DE CATENAIRE

(30) Priority: 12.11.2001 GB 0127112
(43) Date of publication of application: 11.08.2004
(73) Proprietor: CEMBRE LTD, Sutton Coldfield, West Midlands B76 9EE (GB)
(72) Inventor: BAREZZANI, Gualtiero, I-25062 BS Concesio (IT)
(74) Representative: Hill, Richard
(86) International application number: PCT/GB2002/005068
(87) International publication number: WO 2003/041992

(56) References cited:
- GB-A- 629 727
- PATENT ABSTRACTS OF JAPAN vol. 007, no. 265 (M-258), 25 November 1983 (1983-11-25) -& JP 58 145531 A (SHINKOU DENKI KK), 30 August 1983 (1983-08-30)
- PATENT ABSTRACTS OF JAPAN vol. 1996, no. 01, 31 January 1996 (1996-01-31) -& JP 07 246862 A (EAST JAPAN RAILWAY CO;OTHERS: 01), 26 September 1995 (1995-09-26)
- PATENT ABSTRACTS OF JAPAN vol. 1999, no. 11, 30 September 1999 (1999-09-30) -& JP 11 157367 A (EAST JAPAN RAILWAY CO;SANWA TEKKI CORP), 15 June 1999 (1999-06-15)

## Description

This invention relates to the maintenance and repair of railway or railroad catenaries.

Such a catenary comprises at least one electrical conductor wire which is suspended from a supporting structure by a series of spaced flexible elements and is connected to a source of electricity, the wire being positioned for engagement on its underside by electrical contacts carried by pantographs mounted on locomotives or power units of trains travelling along tracks beneath the catenary. The wire is usually formed with opposed longitudinal grooves along its respective sides.

Often sections of the wire become worn and have to be replaced. This is done by cutting out the worn section, inserting a new section of wire in its place and joining the opposite ends of the new section to the respective adjacent ends of the lengths of old wire by means of connectors.

The present invention is particularly concerned with connectors used for this purpose.

The connectors at present available on the market are fitted by clamping or crimping methods. To attain correct installation of a new section of wire it is essential that its ends are connected to the ends of the existing sections in such a way as to minimise discontinuities in the wire and/or sudden steps in the underside of the wire which can arise when the sections are aligned because the existing sections will usually still have a degree of wear on their undersides. This is to avoid violent bumps between the wires and the contacts of pantographs. Such violent bumps cause detachment of the pantograph from the wire, so generating electric arcs that will cause excessive damage to the surfaces of both the pantograph contact and the wire.

Since the development of high speed trains that utilise electric locomotives powered through grooved wires, it is increasingly important to limit any such violent bumps, which would be emphasised by the high speed. Such violent bumps would cause undesirable wear and stress both to the pantograph and to the wire.

Up to now this problem has been solved in two ways:
1. Manually levelling off the underside of the new wire section so that it is at the same level and also of the same shape as the undersides of the adjacent ends of the existing wire sections. For this purpose operators would typically use tools such as files, grindstones, abrasive discs, etc. This solution is relatively difficult and time consuming when performed correctly and it depends greatly on the ability of the operator.
2. Utilising electrical connectors that allow a manual, mechanical adjustment to one or both of each pair of adjacent ends of the sections thereby aligning the surfaces underneath the ends to form a smooth, continuous transition between worn and new sections. This second solution requires the use of a complex and expensive electrical connector and also requires an operator with skill and care to attain correct alignment at installation.

The object of the invention is to provide a connector for the purpose specified that allows easy and correct joining of the ends of two adjacent wire sections.

According to the invention there is provided a connector for joining together opposed ends of two sections of wire in a catenary which comprises a body adapted for attachment to said ends of the two wire sections so as to join said sections together, wherein the underside of the body is formed to provide a surface which, when the connector is attached to the ends of the two wire sections, extends between the undersides of end portions of the wire sections to provide a continuous transition between said undersides for movement of an electrical contact of a pantograph along the wire.

The surface provided by the connector body may arranged so that at one end thereof it is flush with the underside of the adjacent end portion of one of the wire sections to which the connector is attached, the surface extending from said end at an inclination to the length of the other wire section so that it intersects a plane containing the underside of said other wire section irrespective of the position of said plane relative to a plane containing the underside of said one wire section.

In another arrangement the surface provided by the connector body may comprise two longitudinal sections extending in opposite directions from an intermediate part of the surface each at an inclination to the length of a respective wire section so that it intersects a plane containing the underside of said wire section irrespective of the position of said plane relative to a plane containing the underside of the other wire section.

The idea is that when using the connector to join a new wire section to an old wire section which may be partially worn, in the first described arrangement it is attached to the adjacent ends of the sections with the said end of the surface flush with the underside of the new wire section. Then, because the surface extends from its said end at an inclination to the length of the old wire section it will intersect the plane containing the underside of the old section irrespective of the extent to which the underside has been worn away and hence the distance by which the two planes are spaced from one another. In the second arrangement, when the connector is attached to an old wire section and a new wire section, both longitudinal sections of the surface act in this way. In both cases, therefore, the surface therefore provides a smooth continuous transition for a pantograph contact passing along the wire from one section of the wire to the other. This is achieved without any risk of error by a person installing the connector.

The connector preferably has means for locating two wire sections to be joined together in end-to-end alignment. When designed for use with grooved wires these means are preferably opposed ribs or other projections arranged to engage in the respective grooves at opposite sides of the wire sections. These ribs or other projections or/and adjacent portions of the connector which are arranged to contact the wire sections are preferably knurled or roughened so as to increase the surface area of the connector in contact with the wire sections.

The connector is preferably adapted to be attached to the wire sections by gripping them. Conveniently the connector is formed in two parts arranged to be clamped together with the wire sections between them. The opposed faces of the two parts are preferably formed adjacent one side thereof with interengageable formations, for example a rib and a groove respectively, adapted when the two parts are positioned with wire sections between them and the formations are brought together, to act as a hinge enabling the parts to be closed on to the sections. The connector can therefore be fitted easily, minimising the fitting time. The two parts are preferably clamped to the wire sections by bolts extending through the parts although other suitable forms of fasteners could be used.

The invention will now be described by way of example with reference to the accompanying drawings, in which:-
FIGURE 1 is a side view showing an old section and a new section of a catenary wire in a position ready for their joining together by a connector,
FIGURE 2 is a cross section of the new section taken on the line II-II in FIGURE 1,
FIGURE 3 is a side view of one form of connector embodying the invention showing it attached to the wire sections of FIGURE 1,
FIGURE 4 is an end view of the connector taken in the direction arrow IV in FIGURE 3,
FIGURE 5 is a perspective view of the connector corresponding to FIGURE 3 and showing a succession of positions adopted by the electrical contact of a pantograph as it passes beneath the connector,
FIGURE 6 is a perspective view similar to FIGURE 5 taken from the opposite side,
FIGURE 7 is a side view of the connector similar to FIGURE 3 and showing cross sectional views at the respective positions of the pantograph contact,
FIGURE 8 is a side view of another form of the connector embodying the invention showing it connected to the wire sections of FIGURE 1,
FIGURE 9 is an end view of the connector illustrated in FIGURE 8,
FIGURE 10 is a perspective view from one side of the connector shown in FIGURE 8, and
FIGURE 11 is a perspective view from the other side of the connector shown in FIGURE 8.

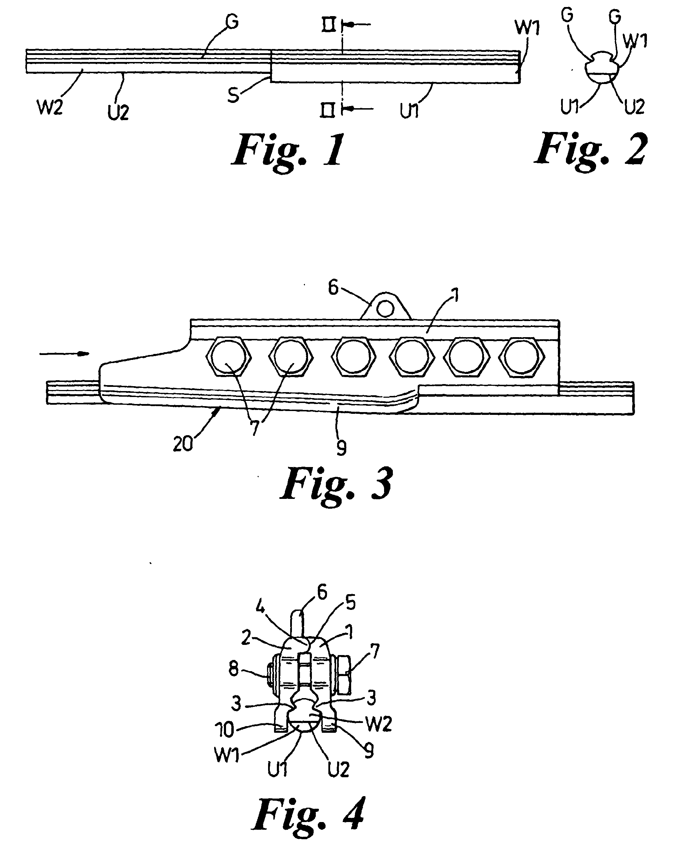

In the drawings FIGURES 1 and 2 show a new section of wire W1 which is required to be joined to an old section of wire W2 in a railway catenary. The wire is formed at opposite sides thereof with grooves G. It will be noted that the underside U1 of the new wire section W1 is concave in shape whereas the underside U2 of the old section W2 has been partly worn away and is flat.

The two forms of connector for joining the wire sections together which are illustrated in the drawings, each comprises a body formed in two parts 1 and 2. The two parts are made of a copper alloy exhibiting the best compromise between the characteristics of mechanical resistance and electrical conduction. The two parts are clamped to the wire sections to join them together and to provide an electrical connection between them.

The opposed inner faces of the two parts 1 and 2 of the body of the connector are formed adjacent one side thereof with opposed longitudinal ribs 3 shaped to engage snugly in the respective grooves G at opposite sides of the wire sections W1 and W2. These ribs are knurled or roughened so as to increase the surface area of the body in contact with the wire sections thereby improving the electrical and mechanical connection. As shown in FIGURE 4 the inner faces of the two parts of the body are also formed adjacent the opposite side with interengageable formations comprising a concave rib 4 on the part 2 and a complementary groove 5 in the part 1.

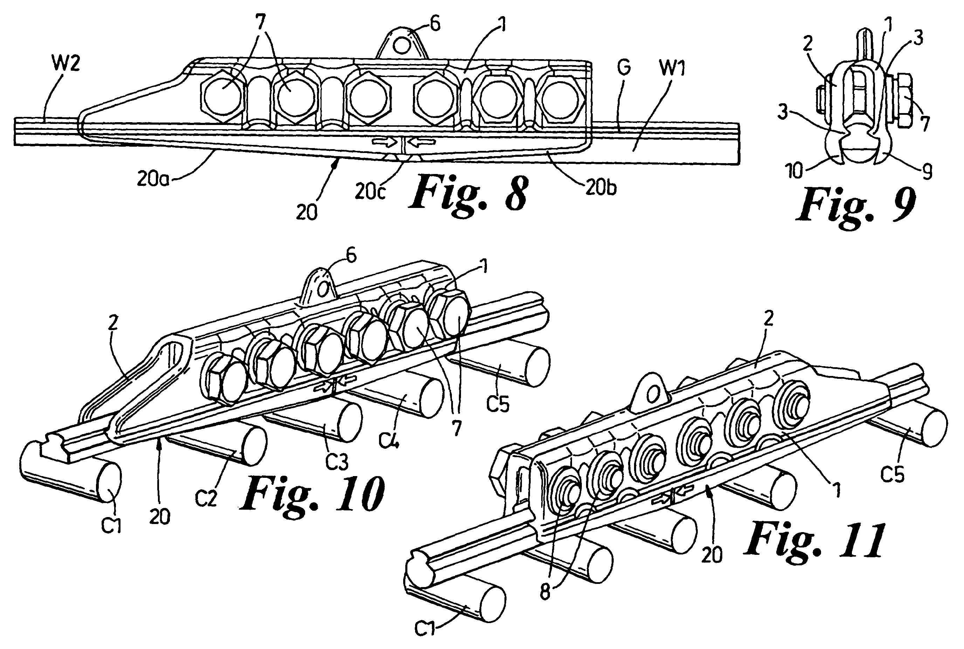

In the embodiment of FIGURES 3 to 7 the lower portions of the parts 1,2 adjacent the ribs 3 are of rectangular cross section as seen in FIGURE 4 whereas in the embodiment of FIGURES 8 to 11 these portions are of curved tapering form as shown in FIGURE 9 so that they follow the profile of the wire more closely, this keeping the contact point of a pantograph contact closer to the centre of the wire, which is preferable.

The part 2 of the connector in both embodiments is provided with an eyelet 6 to which is attached one of the flexible elements suspending the wire from the supporting structure of the catenary. Alternatively the eyelet could be provided on the part 1. The eyelet is positioned as close as possible to the centre of gravity.

The procedure for joining together the two wire sections W1 and W2 by the connector of the invention first involves bringing together the opposed ends of the sections as shown in FIGURE 1 and holding them in this position by means of a jig or other temporary device (not shown). The two parts of the connector are then brought together in an open position with the rib 4 engaged in the groove 5. The two parts are then closed on to the butting end portions of the wire sections in the manner of a pair of jaws with the rib and groove formations 4 and 5 acting as a form of hinge. The two parts of the connector are then clamped together by bolts 7 which pass through holes in the two parts and are fitted with nuts 8 or other fasteners at their outer ends, there being a sufficient number of bolts to ensure a strong and effective mechanical and electrical connection between the connector and the wire sections. The two parts can only be connected together in the correct way.

It is evident from the drawings that because the two wire sections W1 and W2 are joined together with their grooves G in alignment, the undersides U1 and U2 of the sections (FIGURE 1) are disposed in parallel planes which are spaced from one another. There is therefore a step S at the junction of the two sections (FIGURE 1) which if an electrical contact of a pantograph were allowed to run over it would cause a violent bump and a temporary break in the electrical contact resulting in arcing.

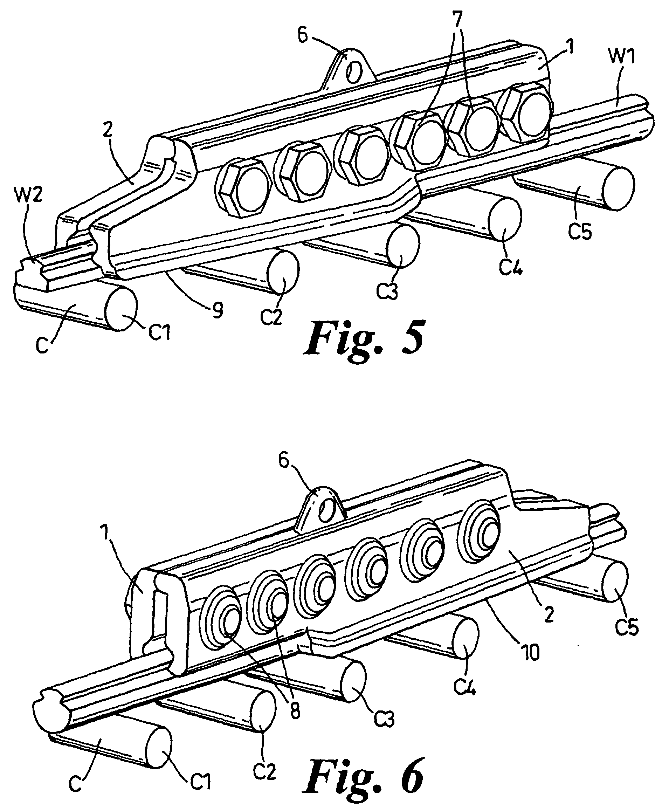

In order to prevent this happening the connector according to the invention is formed with a surface 20 which is arranged to provide a smooth continuous transition for the electrical contact of a pantograph as it travels beneath the connector from one section to another. Such a contact C is illustrated diagrammatically in FIGURES 5, 6 and 7 and in FIGURES 10 and 11 which show a succession of positions C1 .... C5 assumed by the contact as it passes beneath the connector.

The said surface 20 of the connector comprises two surface portions 9, 10 formed on the respective parts 1,2 of the connector body and disposed, in use, at opposite sides of the wire.

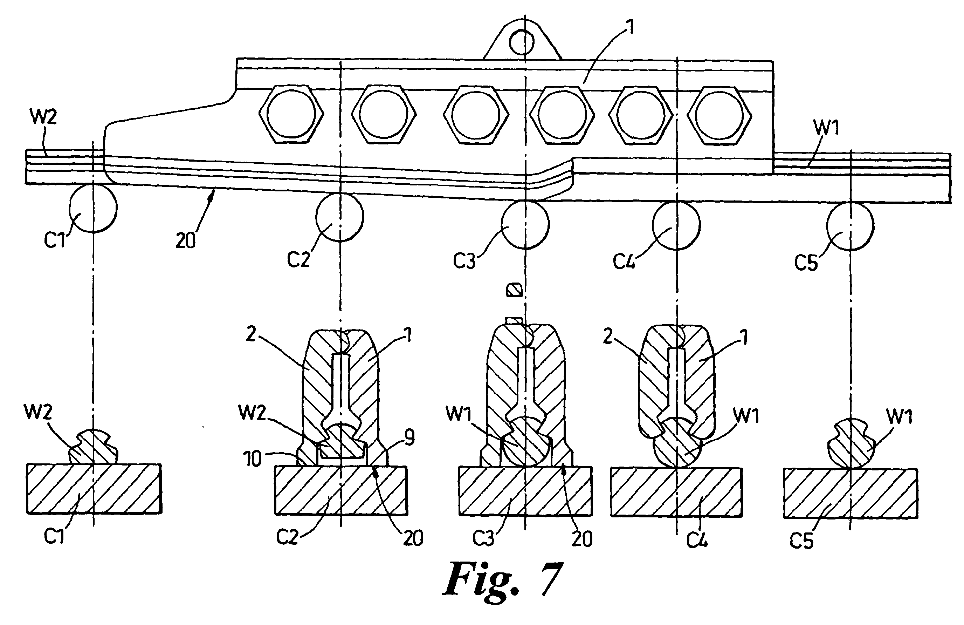

In the embodiment of FIGURES 3 to 7 the surface 20 is arranged so that at the end thereof adjacent the new section of wire W1 it is flush with the underside of that section as shown at position C3 in FIGURE 7. The surface extends from this end at an inclination to the length of the old section of wire W2 so that irrespective of the extent to which this section is worn the surface will intersect the plane containing the underside of the old section. As a result the electrical contact of the pantograph is guided by the surface in a smooth continuous movement from or to (depending upon the direction of travel) a position in contact with the old section W2 to or from its position in contact with the underside of the new section W1.

In the embodiment of FIGURES 8 to 11 the surface 20 comprises two longitudinal sections 20a,20b extending in opposite directions from an intermediate part 20c of the surface. The section 20b extends at an inclination to the length of the new wire section W1 and the section 20a extends at an opposite, similar inclination to the length of the old wire section W2. The two sections 20a,20b therefore intersect the respective planes containing the undersides of the wire sections W2,W1 irrespective of the positions of said undersides relative to the connector. This also produces a smooth continuous movement in both directions of travel of a pantograph contact beneath the joint between the two wire sections. This arrangement enables the connector to be used for joining together two old sections of wire one of which is more worn than the other.

The intermediate part 20c of the surface is located at the junction between the two wire sections, the position being marked on the connector by a vertical line and two opposing arrows to provide an aid to correct alignment of the wire sections and assembly of the connector.

Advantages of the present invention are that the variability of the junction between two wire sections due to the operator are eliminated, assembly of the connector is easy and installation time is therefore minimised resulting in a reduction of the total cost. The connector automatically acts to provide a smooth, transitional, inclined surface between the underside of a worn wire section and the underside of a new wire section or another, less worn old section so avoiding geometrical discontinuities or steps that would otherwise cause excessive violent bumping between pantographs and power supply wires. The invention enables there to be minimisation of the weight and dimensions of the connector, installation time and cost and the degree of operator skill required.

## Claims

1. A connector for joining together opposed ends of two sections of wire (W1,W2) in a catenary, the connector comprising a body (1,2) adapted for attachment to opposed ends of two wire sections so as to join said sections together, the underside of the body being provided with a surface which, when the connector is attached to opposed ends of two wire sections (W1,W2), extends between the undersides of portions of the wire sections to provide a continuous transition between said undersides for movement of an electrical contact (C) of a pantograph along the wire, **characterised in that** the said surface provided by the connector body (1,2) comprises a surface portion (20, 20a or 20b) arranged so that on fitting of the connector to opposed ends of two wire sections, it is disposed at an inclination to the length of one of said wire sections and intersects a plane containing the underside of that wire section irrespective of the position of said plane relative to a plane containing the underside of the other of said wire sections.

2. A connector as claimed in Claim 1 in which the surface (20) provided by the connector body (1,2) is arranged so that when the adapter is fitted to opposed ends of two wire sections it is flush at one end thereof with the underside of a portion of one of the wire sections and extends from said end at an inclination to the underside of the other wire section.

3. A connector as claimed in Claim 1 in which the said surface provided by the connector body (1,2) comprises a further inclined surface portion (20b or 20a), the two surface portions (20a,20b) extending in opposite directions from an intermediate part (20c) of the said surface each at an inclination to the length of a respective wire section so that it intersects a plane containing the underside of said wire section irrespective of the position of said plane relative to a plane containing the underside of the other wire section.

4. A connector as claimed in Claim 1, 2 or 3 which has means for locating two wire sections to be joined together in end-to-end alignment.

5. A connector as claimed in Claim 4 for use with grooved wires wherein the said means are opposed ribs (3) or other projections arranged to engage in the respective grooves (G) at opposite sides of the wire sections (W1,W2).

6. A connector as claimed in Claim 5 wherein the said ribs (3) or other projections or/and adjacent portions of the connector which are arranged to contact the wire sections are knurled or roughened so as to increase the surface area of the connector in contact with the wire sections.

7. A connector as claimed in any one of the preceding claims which is adapted to be attached to the wire sections by gripping them.

8. A connector as claimed in Claim 7 wherein the connector is formed in two parts (1,2) arranged to be clamped together with the wire sections between them.

9. A connector as claimed in Claim 8 wherein the opposed faces of the said two parts (1,2) are formed adjacent one side thereof with interengageable formations, for example a rib and a groove (4,5) respectively, adapted when the two parts are positioned with wire sections between them and the formations are brought together, to act as a hinge enabling the parts to be closed on to the sections.

10. A connector as claimed in Claim 8 or 9 wherein the said two parts are clamped to the wire sections by bolts (7) extending through the parts.

## Revendications

1. Connecteur destiné à réunir des extrémités opposées de deux sections de câbles (W1, W2) dans une caténaire, le connecteur comprenant un corps (1, 2) conçu pour une fixation aux extrémités opposées des deux sections de câbles de façon à réunir lesdites sections, le côté inférieur du corps étant doté d'une surface qui, lorsque le connecteur est fixé aux extrémités opposées des deux sections de câbles (W1, W2), s'étend entre les côtés inférieurs des parties des sections de câbles pour fournir une transition continue entre lesdits côtés inférieurs au mouvement d'un contact électrique (C) d'un pantographe le long du câble, **caractérisé en ce que** ladite surface fournie par le corps du connecteur (1, 2) comprend une partie de surface (20, 20a ou 20b) disposée de sorte que, lors du montage du connecteur aux extrémités opposées des deux sections de câbles, elle soit disposée suivant une inclinaison par rapport à la longueur de l'une desdites sections de câbles et coupe un plan contenant le côté inférieur de cette section de câble indépendamment de la position dudit plan par rapport à un plan contenant le côté inférieur de l'autre desdites sections de câbles.

2. Connecteur selon la revendication 1, dans lequel la surface (20) fournie par le corps du connecteur (1, 2) est disposée de sorte que, lorsque l'adaptateur est monté aux extrémités opposées des deux sections de câbles, elle est dans le même plan à une de ses extrémités que le côté inférieur d'une partie de l'une des sections de câbles et s'étend depuis ladite extrémité suivant une inclinaison vers le côté inférieur de l'autre section de câble.

3. Connecteur selon la revendication 1, dans lequel ladite surface fournie par le corps de connecteur (1, 2) comprend une partie de surface davantage inclinée (20b ou 20a), les deux parties de surface (20a, 20b) s'étendant dans des directions opposées depuis une partie intermédiaire (20c) de ladite surface, chacune suivant une inclinaison par rapport à la longueur d'une section de câble respective, de sorte qu'elle coupe un plan contenant le côté inférieur de ladite section de câble indépendamment de la position dudit plan contenant le côté inférieur de l'autre section de câble.

4. Connecteur selon la revendication 1, 2 ou 3, qui comporte des moyens pour positionner les deux sections de câbles à réunir dans un alignement bout-à-bout.

5. Connecteur selon la revendication 1 pour une utilisation avec des câbles rainurés, dans lequel lesdits moyens sont des nervures opposées (3) ou autres protubérances agencées pour s'insérer dans les rainures respectives (G) au niveau des côtés opposés des sections de câbles (W1, W2).

6. Connecteur selon la revendication 5, dans lequel lesdites nervures (3) ou autres protubérances ou/et parties adjacentes du connecteur qui sont agencées pour venir en contact avec les sections de câbles sont moletées ou rendues rugueuses de façon à augmenter l'aire de surface du connecteur en contact avec les sections de câbles.

7. Connecteur selon l'une quelconque des revendications précédentes, qui est conçu pour être attaché aux sections de câbles en les serrant.

8. Connecteur selon la revendication 7, dans lequel le connecteur est formé en deux parties (1, 2) disposées pour être serrées ensemble avec les sections de câbles entre elles.

9. Connecteur selon la revendication 8, dans lequel les faces opposées desdites deux parties (1, 2) sont formées de façon adjacente à un de leurs côté avec des éléments pouvant s'engager mutuellement, par exemple une nervure et une rainure (4, 5) respectivement, adaptés lorsque les deux parties sont positionnées avec les sections de câbles entre celles-ci et que les dispositifs sont réunis, afin de fonctionner comme une charnière permettant aux parties d'enfermer les sections.

10. Connecteur selon la revendication 8 ou 9, dans lequel lesdites deux parties sont serrées sur les sections de câbles à l'aide de boulons (7) traversant les parties.

## Patentansprüche

1. Verbinder zum Verbinden zweier einander gegenüberliegender Enden zweier Abschnitte eines Drahtes (W1, W2) in einer Fahrleitung miteinander, wobei der Verbinder einen Körper (1, 2) aufweist, welcher für die Anbringung an einander gegenüberliegender Enden zweier Drahtabschnitte angepasst ist, so dass die genannten Abschnitte miteinander verbunden werden, wobei die Unterseite des Körpers mit einer Oberfläche versehen ist, welche, wenn der Verbinder an einander gegenüberliegende Enden von zwei Drahtabschnitten (W1, W2) angebracht ist, sich zwischen den Unterseiten von Teilen der Drahtabschnitte erstrecken, um einen kontinuierlichen Übergang zwischen den genannten Unterseiten zur Bewegung eines elektrischen Kontakts (C) eines Pantographen längs eines Drahtes vorzusehen, **dadurch gekennzeichnet, dass** die genannte Oberfläche, welche durch den Verbinderkörper (1, 2) vorgesehen ist, einen Oberflächenteil (20, 22a oder 20b) aufweist, welcher so angeordnet ist, dass er beim Anbringen des Verbinders an einander gegenüberliegende Enden zweier Drahtabschnitte unter einer Neigung zu der Länge eines der genannten Drahtabschnitte liegt und eine Ebene schneidet, welche die Unterseite des genannten Drahtabschnittes enthält, unabhängig von der Position der genannten Ebene relativ zu einer Ebene, welche die Unterseite des anderen der genannten Drahtabschnitte enthält.

2. Verbinder nach Anspruch 1, bei welchem die Oberfläche (20), welche von dem Verbinderkörper (1, 2) vorgesehen ist, so angeordnet ist, dass sie, wenn der Adapter an einander gegenüberliegenden Enden zweier Drahtabschnitte angebracht ist, an ihrem einen Ende mit der Unterseite eines Teils eines der Drahtabschnitte bündig ist und sich von dem genannten Ende in einer Neigung zu der Unterseite des anderen Drahtabschnitts erstreckt.

3. Verbinder nach Anspruch 1, bei welchem die genannte Oberfläche, welche von dem Verbinderkörper (1, 2) vorgesehen ist, einen weiteren geneigten Oberflächenteil (20b oder 20a) aufweist, wobei die zwei Oberflächenteile (20a, 20b) sich in entgegengesetzten Richtungen von einem Zwischenteil (20c) der genannten Oberfläche aus jeweils in einer Neigung zu der Länge eines jeweiligen Drahtabschnitts erstrecken, so dass er eine Ebene schneidet, welche die Unterseite des genannten Drahtabschnitts enthält, unabhängig von der Position der genannten Ebene relativ zu einer Ebene, welche die Unterseite des anderen Drahtabschnitts enthält.

4. Verbinder nach Anspruch 1, 2 oder 3, welcher Mittel zum Plazieren zweier in Ende-zu-Ende-Ausrichtung zu verbindender Drahtabschnitte hat.

5. Verbinder nach Anspruch 4 zur Verwendung bei Rillendrähten, wobei die genannten Mittel einander gegenüberliegende Rippen (3) oder andere Vorsprünge sind, welche so angeordnet sind, dass sie in die jeweiligen Rillen (G) auf einander gegenüberliegenden Seiten der Drahtabschnitte (W1, W2) eingreifen.

6. Verbinder nach Anspruch 5, bei welchem die genannten Rippen (3) oder anderen Vorsprünge oder/und benachbarte Teile des Verbinders, welche so angeordnet sind, dass sie die Drahtabschnitte berühren, geriffelt oder aufgeraut sind, so dass der Oberflächenbereich des Verbinders in Berührung mit den Drahtabschnitten vergrößert ist.

7. Verbinder nach einem der vorhergehenden Ansprüche, welcher dazu angepasst ist, um an den Drahtabschnitten durch deren Ergreifen angebracht zu werden.

8. Verbinder nach Anspruch 7, bei welchem der Verbinder in zwei Teilen (1, 2) gebildet ist, welche so angeordnet sind, dass sie mit den Drahtabschnitten zwischen sich zusammengeklemmt werden.

9. Verbinder nach Anspruch 8, bei welchem einander gegenüberliegende Flächen der genannten zwei Teile (1, 2) benachbart einer Seite von ihnen mit ineinander greifenden Formationen ausgebildet sind, z.B. jeweils einer Rippe und einer Nut (4, 5), welche dazu ausgebildet sind, wenn die zwei Teile mit den Drahtabschnitten zwischen sich und den zusammengebrachten Formationen positioniert sind, als ein Scharnier zu wirken, welches gestattet, dass die Teile auf die Abschnitte zu geschlossen werden.

10. Verbinder nach Anspruch 8 oder 9, bei welchem die genannten zwei Teile mittels Bolzen (7), welche sich durch die Teile erstrecken, an die Drahtabschnitte geklemmt sind.
